**Europäisches Patentamt**

**European Patent Office**

**Office européen des brevets**

(19)

(11) Veröffentlichungsnummer : **0 221 343**
**B1**

(12) **EUROPÄISCHE PATENTSCHRIFT**

(45) Veröffentlichungstag der Patentschrift :
**11.01.89**

(21) Anmeldenummer : **86113478.1**

(22) Anmeldetag : **01.10.86**

(51) Int. Cl.⁴ : **F 16 K 13/10, G 21 C 19/06**

(54) Selbsttätiges Belüftungsventil für kleine Druckdifferenzen.

(30) Priorität : **02.10.85 DE 3535228**

(43) Veröffentlichungstag der Anmeldung :
**13.05.87 Patentblatt 87/20**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**EP--A-- 0 122 194**
**BE--A-- 622 581**
**DE--B-- 1 089 083**
**FR--A-- 1 582 618**

(73) Patentinhaber : **INTERATOM Gesellschaft mit beschränkter Haftung**
**Friedrich-Ebert-Strasse**
**D-5060 Bergisch-Gladbach 1 (DE)**

(72) Erfinder : **Brockmann, Klaus, Dipl.-Ing.**
**Am Fürstenbrünnchen 11a**
**D-5060 Bergisch Gladbach (DE)**
Erfinder : **Bruder, Herbert**
**Wipperfuerther Strasse 54**
**D-5060 Bergisch Gladbach 1 (DE)**

(74) Vertreter : **Mehl, Ernst, Dipl.-Ing. et al**
**Postfach 22 13 17**
**D-8000 München 22 (DE)**

Jouve, 18, rue St-Denis, 75001 Paris, France

## Beschreibung

Die vorliegende Erfindung betrifft ein selbsttätiges Belüftungsventil nach dem Oberbegriff des ersten Anspruchs, wie es auf diesem Gebiet allgemein bekannt ist. In Kernenergieanlagen ist es üblich, Räume, in denen mit der Freisetzung von Radioaktivität gerechnet werden muß (in denen z. B. bestrahlte Brennelemente gehandhabt werden), gegenüber der Umgebung auf einem geringen Unterdruck zu halten, um das unkontrollierte Entweichen der Radioaktivität zu verhindern. Die ständig aus dem genannten Raum abgesaugte Luft wird dann kontrolliert über geeignete Filter wieder an die Umgebung abgegeben. Der Zustrom der Außenluft erfolgt über entsprechende, in einer Wand des Raumes angebrachte Belüftungsöffnungen. In Sicherheitsstudien wurde als Störfall postuliert, daß diese Belüftungsöffnungen kurzfristig versperrt werden können. Die erst mit einer gewissen Zeitverzögerung bzw. bei Unterstellen eines weiteren Störfalles überhaupt nicht abzuschaltenden Gebläse würden dann weiter Luft aus dem Raum fördern und den Unterdruck in demselben erhöhen. Bereits bei Unterdrucken von 8 mb (1 mb ≙ 14 Pa) wird mit der Möglichkeit von durch den Unterdruck hervorgerufenen Schäden am Raum oder seinen Einrichtungen gerechnet. Es ist daher Stand der Technik, derartige Räume mit Sicherheitsventilen zu versehen, die im Normalbetrieb dank des Vorhandenseins einer Flüssigkeitsvorlage (üblicherweise mit einem Öl) völlig dicht sind, bei Unterschreiten des Nennunterdruckes von z. B. 2 bis 3 mb jedoch der Außenluft neue Wege in das Innere des Raumes eröffnen. Da gewichts- oder federbelastete Ventile bei der geringen Druckdifferenz nicht mit ausreichender Sicherheit und Genauigkeit öffnen, bzw. im Normalbetrieb nicht genügend abdichten, war man bisher zum Einsatz von Ventilen gezwungen, die im Störfall unter Zuhilfenahme von Fremdenergie geöffnet wurden. Bei bisherigen Konstruktionen von Ventilen mit Flüssigkeitsvorlage wurde zumindest im Beginn des Öffnens ein Teil der Flüssigkeitsvorlage durch die dann einsetzende Luftströmung mitgerissen, zerstäubt und in das Innere des Raumes gesaugt.

Aufgabe der vorliegenden Erfindung ist es, ein selbsttätiges Belüftungsventil weiter zu entwickeln, bei dem die letztgenannten Möglichkeiten vermieden sind und das unter Verzicht auf die Zufuhr von Fremdenergie eine sichere Beherrschung von Druckdifferenzen weniger mb erlaubt.

Die Lösung dieser Aufgabe erfolgt mittels der im kennzeichnenden Teil des ersten Anspruchs angegebenen Mittel. Das Gewicht der beweglichen Teile, d. h. der Glocken ist so bemessen, daß es die bei Nennunterdruck auf sie wirkenden Kräfte gerade ausgleicht ; wird die Druckdifferenz größer, so führt der auf die Innenseite der Glocken wirkende Außendruck dazu, daß letztere teilweise (erste Glocken) aus der Flüssigkeit austauchen und den Strömungsweg für die Luft freigeben. Um ein Mitreissen von Flüssigkeitsteilchen zu verhindern, sollte diese Glocke deutlich, d. h. um mehrere Zentimeter von der Flüssigkeitsoberfläche entfernt sein. Dies gelingt durch die mit Hilfe der geforderten Drossel künstlich hervorgerufene Druckdifferenz zwischen den ersten und zweiten Glocken, wobei letztere zumindest mit ihrem unteren Rand eingetaucht bleiben und ihre Schwimmerfunktion weiterhin erfüllen.

Läßt sich das Ausmaß der Störung, d. h. der Grad der Verstopfung der normalen Belüftungswege nicht genau vorhersehen, ergibt sich die Forderung nach einer über einen weiten Durchsatzbereich (z. B. von 5 m³/h bis 200 m³/h, d. h. über annähernd zwei Größenordnungen) reichenden Wirksamkeit des Ventils. Die Ausgestaltung der Erfindung nach dem zweiten Anspruch erfüllt diese Forderung.

Der dritte Anspruch definiert eine spezielle Ausführungsform der beschriebenen Ausgestaltung der Erfindung. Bei geringen Durchsätzen werden nur die Bohrungen in der lose auf ihrem Sitz aufliegenden Klappe wirksam, während sie bei größeren Durchsätzen abhebt, einen größeren Querschnitt freigibt und so einen annähernd gleichbleibenden Druckverlust erzeugt.

Ein Ausführungsbeispiel der Erfindung ist in der Zeichnung dargestellt, und zwar zeigt

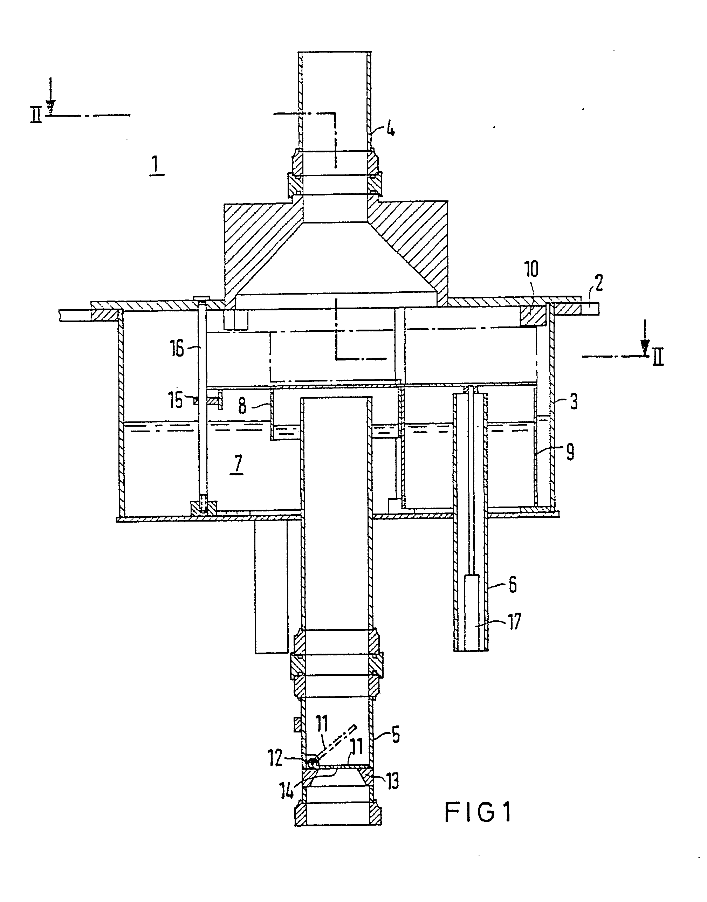

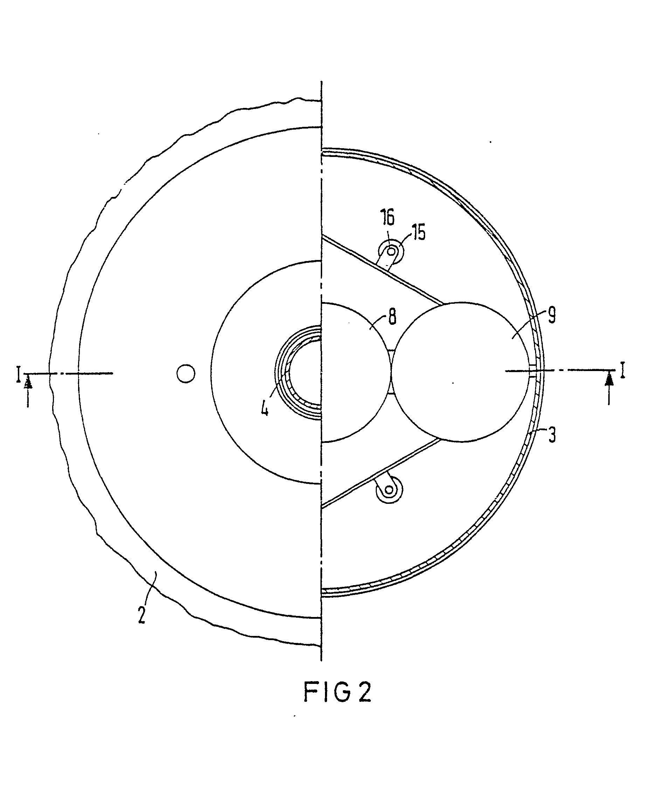

Figur 1 dieselbe im Längsaxialschnitt entsprechende Linie I-I der Figur 2 und die

Figur 2 eine Draufsicht bzw. einen Querschnitt entsprechend der Linie II-II der Figur 1.

Ein nicht näher beschriebener Raum (Unterdruckraum) 1, der gegenüber der Umgebung normalerweise auf einen geringen Unterdruck, z. B. von 2 bis 3 mb gehalten wird, wird durch eine Wand 2 abgeschlossen. In eine im Boden des Raumes 1 angebrachte Öffnung dieser Wand ist ein Ventilgehäuse 3 dicht eingelassen. Das Gehäuse 3 besitzt einen sich in den Raum 1 öffnenden Anschluß 4 ; in die untere Wand des Gehäuses 3 sind im Beispiel ein erster Stutzen 5 und drei um diese herumgruppierte zweite Stutzen 6 eingelassen, die so weit in das Innere des Gehäuses hineinragen, daß die oberen Öffnungen derselben über den Spiegel einer das Gehäuse teilweise füllenden Flüssigkeit 7, z. B. Öl reichen. Entsprechend der Druckdifferenz ist der Spiegel in dem Bereich, der mit dem Raum 1 in Verbindung steht, um eben das Maß dieser Druckdifferenz höher als innerhalb einer ersten Glocke 8 und von drei zweiten Glocken 9, die mit ihrer offenen Seite nach unter über die dazugehörigen Stutzen 5, 6 gestülpt sind. Bei der im Normalbetrieb anstehenden Druckdifferenz ruhen die fest miteinander verbundenen Glocken 8, 9 vermöge ihres Gewichtes auf den Böden des Gehäuses 3. Durch die Flüssigkeitsvorlage ist der Strömungsweg zwischen der Umgebung und dem Raum 1 sicher unterbrochen. Erhöht sich die Druckdifferenz, gleicht der anstehende Außendruck zumindest einen Teil des Gewichtes der aus den fest miteinander verbundenen Glocken 8, 9 bestehenden Konstruktion aus und diese bekommt zusätzlichen Auftrieb, bis der untere Rand der ersten Glocke 8 aus der Flüssigkeit 7 austaucht. Ohne die im nachfolgenden zu beschreibenden Einrichtungen würde das Maß des Austauchens nur wenige Millimeter betragen, und bei dem dann einsetzenden Druckausgleich zwischen der Umgebung und dem Raum 1 würden zahlreiche Flüssigkeitspartikel durch den Luftstrom in den letzteren gerissen. Der erste Stutzten 5 ist jedoch mit einer Drossel versehen, die im wesentlichen aus einer um eine Achse 12 schwenkbaren Klappe 11 besteht, die zunächst infolge ihres Eigengewichtes auf einem Anschlag 13 ruht und eine oder mehrere Bohrungen 14 aufweist. Diese Drossel verursacht einen Druckverlust (in einem ausgeführten Beispiel von ca. 3 mb bei einem Durchsatz von 5 m³/h). Der in den zweiten Glocken 9 anstehende Druck ist also höher als derjenige unter der ersten Glocke 8, und beide zusammen steigen daher um ein größeres Maß (in der Größenordnung von Zentimetern) über die Oberfläche der Flüssigkeit 7 an, z. B. bis zu einem Anschlag 10 (durch die strichpunktierten Linien angedeutet). Für den Druckausgleich steht dann ein größerer Querschnitt zwischen dem unteren Rand der ersten Glocke 8 und der Oberfläche der Flüssigkeit 7 zur Verfügung, wodurch die Strömungsgeschwindigkeit der LKuft wesentlich herabgesetzt wird ; ein nennenswertes Mitreissen von Flüssigkeitsteilchen findet dann nicht mehr statt. Die Bohrung 14 ist so bemessen, daß durch sie hindurch der untere Grenzbereich der zu erwartenden Durchsätze erfolgen kann. Steigt der Durchsatz weiter an, hebt die Klappe 11 von ihrem Sitz 13 ab und gibt den entsprechend vergrößerten Strömungsquerschnitt frei. Bei entsprechender Bemessung braucht der dann durch die Drossel hervorgerufene Druckverlust kaum anzusteigen. Der sicheren Führung der aus den Glocken 8, 9 bestehenden Schwimmkörpers dienen Führungsstücke 15, die auf Stangen 16 gleiten. Um ein Verkanten des Schwimmkörpers zu verhindern, wird diesem durch Gewichte 17 ein tiefliegender Schwerpunkt mitgeteilt. Auch kann durch Änderungen an den Gewichten 17 das Gesamtgewicht des Schwimmkörpers so beeinflußt werden, daß der gewünschte Ansprechdruck des Ventils genau erreicht wird.

**Patentansprüche**

1. Selbsttätiges Belüftungsventil mit Flüssigkeitsvorlage für einen Unterdruck-Raum (1), der gegenüber der Umgebung auf einem geringen Unterdruck haltbar ist, gekennzeichnet durch folgende Merkmale :

a) ein bis zu einem bestimmten Spiegel mit Flüssigkeit (7) füllbares Gehäuse (3) mit einem Anschluß (4) an den Unterdruck-Raum (1) an seiner Oberseite und mehreren zur Umgebung hin offenen, in das Gehäuse ragenden ersten und zweiten Stutzen (5, 6) an seiner Unterseite ;

b) je erstem und zweitem Stutzen (5, 6) eine darübergestülpte erste bzw. zweite Glocke (8, 9), wobei alle Glocken fest miteinander verbunden und im Gehäuse (3) zwischen einer bei Normalbetrieb einzunehmenden unteren und einer oberen Endlage bewegbar sind, und wobei die Höhen der ersten und zweiten Glocken so bemessen sind, daß die ersten Glocken (8) in der oberen Endlage aus der Flüssigkeit (7) austauchen, während die zweiten Glocken (9) eingetaucht bleiben ;

c) in den den ersten Glocken (8) zugeordneten ersten Stutzen (5) sind Strömungsdrosseln eingebaut, die bei Druckausgleich zwischen Umgebung und Unterdruck-Raum (1) einen Druckverlust erzeugen, der größer ist als der zwischen dem Unterdruck-Raum und der Umgebung einzuhaltende Druckunterschied.

2. Ventil nach Anspruch 1, dadurch gekennzeichnet, daß die Strömungsdrosseln einen über einen größeren Durchsatzbereich (etwa zwei Größenordnungen) annähernd gleichbleibenden Druckverlust erzeugen.

3. Ventil nach Anspruch 2, dadurch gekennzeichnet, daß die Strömungsdrosseln aus je einer mit einer oder mehreren Bohrungen (14) versehenen, im Stutzen schwenkbar gelagerten Klappen (11) bestehen.

**Claims**

1. Automatic ventilation valve with a fluid receptacle for a low pressure chamber (1) which can be maintained at a slightly low pressure with respect to the surroundings, characterised by the following features :

a) a casing (3) which can be filled with liquid (7) to a specified liquid level, with a connection (4) on its upper side to the low pressure chamber (1) and several first and second connecting pieces (5, 6) on its lower side, which are open to the surroundings and project into the casing ;

b) a first or second bell (8, 9) inverted over a respective first and second connecting piece (5, 6), wherein all the bells are securely connected together and can be moved in the casing (3) between a lower end position, to be occupied in normal operation, and an upper end position, and wherein the heights of the first and second bells are dimensioned in such a way that the first bells (8) emerge from the liquid (7) in the upper end position, while the second bells (9) remain immersed ;

c) flow impedances are built into the first connecting piece (5) associated with the first bells (8) and produce a pressure loss between the surroundings and low pressure chamber (1) in the case of pressure compensation, this pressure loss being greater than the pressure difference to be preserved between the low pressure chamber and the surroundings.

2. Valve according to claim 1, characterised in that the flow impedances produce a loss of pressure which remains approximately the same over a greater range of throughputs (about two orders of magnitude).

3. Valve according to claim 2, characterised in that the flow impedances each comprise a flap (11) which is provided with one or more drill holes (14) and is stored pivotably in the connecting piece.

**Revendications**

1. Soupape automatique d'aération comportant un réservoir de liquide pour une chambre à dépression (1), qui peut être maintenue à une faible dépression par rapport à l'environnement, caractérisée par les caractéristiques suivantes :

a) un boîtier (3) pouvant être rempli par le liquide (7) jusqu'à un niveau déterminé et comportant un organe (4) de raccordement à la chambre à dépression (1), au niveau du côté supérieur de cette dernière, et plusieurs premières et secondes tubulures (5, 6) débouchant dans l'environnement et pénétrant dans le boîtier, sur le côté inférieur de la chambre ;

b) pour chaque première et seconde tubulures (5, 6), des première et seconde cloches (8, 9) emmanchées par-dessus ces tubulures, toutes les cloches étant reliées respectivement entre elles et étant déplaçables dans le boîtier (3) entre une position d'extrémité inférieure, qui doit être prise lors du fonctionnement normal, et une position d'extrémité supérieure, et les hauteurs des premières et secondes cloches étant dimensionnées de telle sorte que, dans la position d'extrémité supérieure, les premières cloches (8) sont situées hors du liquide (7), tandis que les secondes cloches (9) restent immergées ;

c) dans les premières tubulures (5) associées aux premières cloches (8) se trouvent installés des organes d'étranglement de l'écoulement qui produisent, dans le cas d'une compensation de pression entre l'environnement et la chambre à dépression (1), une perte de pression supérieure à la différence de pression devant être respectée entre la chambre à dépression et l'environnement.

2. Soupape selon la revendication 1, caractérisée par le fait que les organes d'étranglement de l'écoulement produisent une perte de pression, qui reste approximativement constante dans une gamme assez étendue de débits (environ deux ordres de grandeur).

3. Soupape suivant la revendication 2, caractérisée par le fait que les organes d'étranglement de l'écoulement sont constitués chacun par un clapet (11) équipé d'un ou de plusieurs perçages (14) et montés pivotants dans la tubulure.

EP 0 221 343 B1

FIG 1

1

FIG 2